# EUROPEAN PATENT SPECIFICATION

(11) **EP 3 808 016 B1**
(45) Date of publication and mention of the grant of the patent: **30.11.2022**
(21) Application number: 18749351.5
(22) Date of filing: 31.07.2018
(51) Int. Cl.: H04L 1/00

(54) **DIFFERENTIAL CQI VALUE REPORTING PROCEDURE**
MELDEVERFAHREN FÜR DIFFERENZIELLEN CQI-WERT
PROCÉDURE DE RAPPORT DE VALEUR CQI DIFFÉRENTIELLE

(43) Date of publication of application: 21.04.2021
(73) Proprietor: HUAWEI TECHNOLOGIES CO., LTD., Shenzhen, Guangdong 518129 (CN)
(72) Inventor: TOMASIN, Stefano, 35122 Padova (IT); YANG, Shaoshi, 80992 Munich (DE); CENTENARO, Marco, 35122 Padova (IT); BENVENUTO, Nevio, 35122 Padova (IT)
(74) Representative: Roth, Sebastian
(86) International application number: PCT/EP2018/070733
(87) International publication number: WO 2020/025109

(56) References cited:
- EP-A2- 1 892 875
- WO-A2-2008/023930
- US-B2- 9 107 198
- CHIUMENTO ALESSANDRO ET AL: "Gaussian Process Regression for CSI and feedback estimation in LTE", 2015 IEEE INTERNATIONAL CONFERENCE ON COMMUNICATION WORKSHOP (ICCW), IEEE, 8 June 2015 (2015-06-08), pages 1440-1445, XP033202938, DOI: 10.1109/ICCW.2015.7247381 [retrieved on 2015-09-08]

## Description

### TECHNICAL FIELD

The present disclosure relates generally to a procedure of feeding back Channel Quality Indicator (CQI) information from a terminal device to a base station device. The disclosure particularly proposes a terminal device that reports to a base station device a differential CQI value related to a Downlink (DL) channel between the base station device and the terminal device. The differential CQI value reporting procedure of the disclosure can be supported by CQI value prediction, which may be implemented at the base station device and the terminal device, respectively.

### BACKGROUND

In conventional 3GPP Frequency-Division Duplexing (FDD) cellular networks, e.g. in networks according to the Long Term Evolution (LTE) standard, a CQI value is typically obtained by User Equipment (UE) and is reported to an evolved NodeB (eNB) that it is associated and communicating with. The CQI value indicates a quality of a DL channel between the eNB and the UE. Based on the received CQI value, the eNB is able to select or adjust a Modulation and Coding Scheme (MCS), for instance, can choose a suitable DL transmission rate for its next DL transmission(s) to the UE over the DL channel.

The CQI value, which is sent from the UE to the eNB, is usually a 4-bit integer. The four 'feedback bits' may cause transmission overhead, in particular if an individual CQI value is obtained and reported by the UE for each of multiple subbands and/or if a CQI value is reported periodically and in relatively short intervals from the UE to the eNB. In wireless communication system, transmission overhead is always a performance issue.

WO 2018023930 A2 discloses a method for transmitting/receiving feedback information and a method for transmitting/receiving data, which acquire accurate channel information, reduce an amount of overhead, and effectively allocate resources during the initial transmission time.

EP 1892875 A2 discloses a CQI informing method that, in a mobile station of a mobile communication system, can reduce the usage rate of wireless resources required when a CQI value of each of a plurality of partial bands RBs (Resource Block), into which a system band is divided, is sent to a base station.

EP 1892875 A2 discloses an uplink feedback channel reporting method for using the primary and secondary fast feedback channels to efficiently report the channel quality, MIMO feedback, and CQI types of data from a mobile station to a base station.

DOI: 10.1109/ICCW.2015.7247381 discloses a channel quality estimation method based on the concept of Gaussian Process Regression to predict users' channel states for varying user mobility profiles.

### SUMMARY

In view of the above, the present disclosure aims at improving the conventional CQI value reporting procedure. The present disclosure has the objective to reduce a transmission overhead, particularly by reducing the number of feedback bits reported from a terminal device (e.g. UE) to a network node, for instance to a base station device (e.g. eNB). The disclosure aims for fixed-rate CQI value reporting in case of stationary propagation conditions, and aims for a procedure to cope with non-stationary conditions - e.g. in case of abnormal events. The disclosure should work without localization of the terminal device by the network node.

The objective of the present disclosure is achieved by the solution provided in the enclosed independent claims. Advantageous implementations of the present disclosure are further defined in the dependent claims. In the following, parts of the description and drawings referring to embodiments not covered by the claims, are not part of the invention, but are illustrative examples necessary for understanding the invention.

In particular the present disclosure proposes a differential CQI value reporting procedure from a terminal device to a network node, wherein the reporting procedure may be supported by CQI value prediction at both devices. The CQI value predictions are implemented such at the terminal device and network node, respectively, that the predicted CQI values are the same on both sides, i.e. that the CQI value predictions are aligned.

A first aspect provides a terminal device configured to obtain, in a current time interval, a CQI value related to a DL channel between a network node and the terminal device, calculate a differential CQI value based on the obtained CQI value and a CQI value of a previous time interval, and send the differential CQI value to the network node.

The differential CQI value is represented by fewer bits than the CQI value, which is conventionally reported, since only the difference to the previous CQI value, i.e. the CQI value of the previous time interval, needs to be coded. The differential CQI value is accordingly represented by fewer bits than the obtained CQI value and the CQI value of the previous time interval, respectively. Accordingly, transmission overhead caused by feeding back CQI information from the terminal device to the network node can be reduced, and thus the network performance improved.

A time interval is here a period of time, for which a certain CQI value is valid. When a new CQI value is set, i.e. validated, a new time interval starts. The CQI value of the current time interval is accordingly valid during a current time interval, while the CQI value of the previous time interval was valid in a preceding time interval, i.e. before the CQI value of the current time interval was set. Multiple time intervals may have the same length or may differ in length, i.e. a new CQI value may be set periodically or aperiodically. Notably, the obtained CQI value, which is obtained in the current time interval, refers to a measured or estimated value or calculated CQI value, and is not necessarily the "CQI value of the current time interval". If it is decided that the obtained CQI value is reliable, it may be set as the CQI value of the current time interval. Otherwise, for instance, the obtained CQI value may be disregarded, and instead a predicted CQI value may be set as the CQI value of the current time interval. This is described in more detail further below.

In an implementation form of the first aspect, the terminal device is configured to obtain the CQI value and calculate the differential CQI value within a determined subband.

For instance, the terminal device can obtain one differential CQI value per each of a plurality of subbands, particularly per each subband included in an entire frequency band. Accordingly, a higher feedback granularity is possible, but at the same time feedback transmission overhead can be reduced. Alternatively, the terminal device may also be configured to obtain the CQI value and calculate the differential CQI value within the wideband, i.e. within the entire frequency band.

According to the invention, the differential CQI value is designed to indicate: a state associated with a predefined variation of the obtained CQI value over the CQI value of the previous time interval, and a state indicating an abnormal condition associated with an undefined variation of the obtained CQI value over the CQI value of the previous time interval.

A predefined variation is an expected change of the obtained CQI value compared to the CQI value of the previous time interval, while an undefined variation is an unexpected change. A variation may include an increase or decrease of the obtained CQI value over the CQI value of the previous time interval, or an unchanged CQI value.

By the states of the differential CQI value, the network node can derive whether the obtained CQI value (e.g. measured or estimated at the terminal device) is reliable. That is, it is informed about whether the obtained CQI value represents a normal condition or an abnormal condition. A normal condition is e.g. an unchanging CQI value or a slowly increasing/decreasing CQI value (i.e. a predefined variation), while an abnormal condition is e.g. a rapidly changing CQI value (i.e. an undefined variation).

The indication of the abnormal condition to the network node is an important part of the present invention. This is due to the fact that the network node can thus decide based on the received differential CQI value, how to obtain the CQI value of the current time interval, e.g. by updating the CQI value of the previous time interval according to the variation indicated in the differential CQI value (if no abnormal condition is indicated), or by another mechanism that yields a more reliable result (if an abnormal condition is indicated). Such other mechanism may be a CQI value prediction, for instance, based on a machine learning algorithm and/or performed in a neural network (as will be described in more detail below).

In a further implementation form of the first aspect, each CQI value consists of four bits, and the differential CQI value consists of two bits.

Accordingly, the feedback overhead can be reduced by as much as 50%. In particular, if such an overhead reduction is obtained for each of a plurality of subbands, a considerable network performance gain is the result. Generally, each CQI value consists of more bits than the differential CQI value. In other words, each CQI value may be represented by M bits, the differential CQI value may be represented by N bits, and M > N. The above implementation form for the case of four bits for the CQI value and two bits for the differential CQI value, respectively, is only an example.

In a further implementation form of the first aspect, the differential CQI value is designed to indicate an increase or decrease of the obtained CQI value compared to the CQI value of the previous time interval larger than a predefined increase or decrease, said state indicating an abnormal condition.

In a further implementation form of the first aspect, the differential CQI value is designed to indicate the following states: a predefined increase of the obtained CQI value compared to the CQI value of the previous time interval, a predefined decrease of the obtained CQI value compared to the CQI value of the previous time interval, no change of the obtained CQI value compared to the CQI value of the previous time interval, an increase or decrease of the obtained CQI value compared to the CQI value of the previous time interval larger than the predefined increase or decrease indicating an abnormal condition. For instance the predefined increase or decrease may be a small increase or decrease. The increase or decrease larger than the predefined increase or decrease may be indicated as large decrease. In case of stationary propagation conditions, i.e. an unchanging or only slowly changing CQI value, one of the normal states will be indicated. In case of non-stationary propagation conditions, e.g. in case of a rapidly changing CQI value for the DL channel between the network node and the terminal device, an abnormal condition is indicated.

In a further implementation form of the first aspect, the terminal device is configured to store the obtained CQI value as CQI value of the current time interval, if the differential CQI value does not indicate an abnormal condition.

That is, the CQI value, as measured or estimated by the terminal device, may be set as the CQI value of the current time interval, and remains valid until a new CQI value is set.

According to the invention, the terminal device is configured to determine a predicted CQI value from a CQI value of one or more previous time intervals, if the differential CQI value indicates an abnormal condition, and store the predicted CQI value as CQI value of the current time interval.

In this case, the measured or estimated CQI value, after being used to generate the differential CQI value, may be discarded. Instead, the predicted CQI value is set as the CQI value of the current time interval, and remains valid until a new CQI value is set.

The prediction is in particular used to support the proposed differential reporting procedure in case non-stationary conditions occur, e.g. in case of an abnormal event, and is thus an important part of the present invention. The CQI value prediction is beneficial to the reporting procedure proposed, because in case of an abnormal event the CQI value obtained by the terminal device is not reliable. The network node is informed of this situation by indicating the abnormal event in the differential CQI value, and can based thereupon trigger the CQI value prediction.

According to the invention, the terminal device is configured to determine the predicted CQI value by performing a machine learning algorithm.

For instance, the terminal device can employ a neural network to carry out the machine learning algorithm. The machine learning algorithm ensures a high reliability of predicting the CQI value, particularly after providing a learning phase.

According to the invention, the terminal device is configured to receive one or more prediction coefficients from the network node, and perform the machine learning algorithm based on the received prediction coefficients.

Accordingly, the prediction can be improved and further the predicted CQI value can be synchronized with the predicted CQI value obtained (separately) by the network node. Thus, the CQI value prediction can be always aligned between the terminal device and the network node. This is an important part of the present invention, and enables the terminal device and the network node to carry on with the differential CQI value reporting procedure even in the case of abnormal events. Furthermore, the prediction process at the terminal device can be completed faster.

A second aspect provides a network node, configured to receive a differential CQI value from a terminal device, wherein the differential CQI value relates to a DL channel between the network node and the terminal device, and obtain a CQI value of a current time interval based on the differential CQI value and a CQI value of a previous time interval. The network node may be, for instance a base station device.

Thus, transmission overhead generated by the CQI information reporting procedure from the terminal device to the network node is reduced. Nevertheless, the network node still can still obtain an accurate CQI value, in order to e.g. adapt the MCS. While transmission overhead is reduced, no performance is sacrificed. The network node may compute a CQI value from the CQI value of the previous time interval and the differential CQI value, and may set this computed CQI value as the CQI value of the current time interval.

According to the invention, the differential CQI value is designed to indicate: a state associated with a predefined variation of a CQI value obtained by the terminal device over the CQI value of the previous time interval, and a state indicating an abnormal condition associated with an undefined variation of the CQI value obtained by the terminal device over the CQI value of the previous time interval.

The same advantages as described above for the corresponding implementation form of the terminal device of the first aspect are achieved.

In a further implementation form of the second aspect, the network node is configured to obtain the CQI value of the current time interval by updating the CQI value of the previous time interval based on the variation associated with the state indicated by the differential CQI value, if the differential CQI value does not indicate an abnormal condition.

In this case, since the CQI value obtained by the terminal device is reliable, because it reflects a normal condition, the network node directly uses the information in the differential CQI value to compute and set the CQI value of the current time interval from the CQI value of the previous time interval.

According to the invention, the network node is configured to obtain the CQI value of the current time interval by determining a predicted CQI value from a CQI value of one or more previous time intervals, if the differential CQI value indicates an abnormal condition.

In this case, since the CQI value obtained by the terminal device is not reliable, since it reflects an abnormal condition, the network node rather predicts the CQI value from previously set (reliable) CQI values, in order to compensate.

According to the invention, the network node is configured to determine the predicted CQI value by performing a machine learning algorithm.

The same advantages as described above for the corresponding implementation form of the terminal device of the first aspect are achieved.

According to the invention, the network node is configured to send to the terminal device one or more prediction coefficients obtained when performing the machine learning algorithm, particularly when the terminal device enters a determined area associated with the network node.

Thus, the network node can synchronize its CQI value prediction with the CQI value prediction made by the terminal device. Thus, it can be ensured that both have the same CQI value in the current time interval. In fact, the terminal device and the network node are always synchronized, due to the fact that they use the same prediction coefficients for the same machine learning algorithm.

A third aspect provides a method for a terminal device, the method comprising obtaining, in a current time interval, a CQI value related to a DL channel between a network node and the terminal device, calculating a differential CQI value based on the obtained CQI value and a CQI value of a previous time interval, and sending the differential CQI value to the network node.

In an implementation form of the third aspect, the method comprises obtaining the CQI value and calculating the differential CQI value within a determined subband.

According to the invention, the differential CQI value is designed to indicate: a state associated with a predefined variation of the obtained CQI value over the CQI value of the previous time interval, and a state indicating an abnormal condition associated with an undefined variation of the obtained CQI value over the CQI value of the previous time interval.

In a further implementation form of the third aspect, each CQI value consists of four bits, and the differential CQI value consists of two bits.

In a further implementation form of the third aspect, the differential CQI value is designed to indicate the following states: a small increase of the obtained CQI value compared to the CQI value of the previous time interval, a small decrease of the obtained CQI value compared to the CQI value of the previous time interval, no change of the obtained CQI value compared to the CQI value of the previous time interval, a large increase or decrease of the obtained CQI value compared to the CQI value of the previous time interval indicating an abnormal condition.

In a further implementation form of the third aspect, the method comprises storing the obtained CQI value as CQI value of the current time interval, if the differential CQI value does not indicate an abnormal condition.

According to the invention, the method comprises determining a predicted CQI value from a CQI value of one or more previous time intervals, if the differential CQI value indicates an abnormal condition, and store the predicted CQI value as CQI value of the current time interval.

According to the invention, the method comprises determining the predicted CQI value by performing a machine learning algorithm.

According to the invention, the method comprises receiving one or more prediction coefficients from the network node, and performing the machine learning algorithm based on the received prediction coefficients.

The method of the third aspect and its implementation forms achieve the same advantages and effects as described above with respect to the terminal device of the first aspect and its respective implementation forms.

A fourth aspect provides a method for a network node, the method comprising receiving a differential CQI value from a terminal device, wherein the differential CQI value relates to a DL channel between the network node and the terminal device, and obtaining a CQI value of a current time interval based on the differential CQI value and a CQI value of a previous time interval.

According to the invention, the differential CQI value is designed to indicate: a state associated with a predefined variation of a CQI value obtained by the terminal device over the CQI value of the previous time interval, and a state indicating an abnormal condition associated with an undefined variation of the CQI value obtained by the terminal device over the CQI value of the previous time interval.

In a further implementation form of the fourth aspect, the method comprises obtaining the CQI value of the current time interval by updating the CQI value of the previous time interval based on the variation associated with the state indicated by the differential CQI value, if the differential CQI value does not indicate an abnormal condition.

According to the invention, the method comprises obtaining the CQI value of the current time interval by determining a predicted CQI value from a CQI value of one or more previous time intervals, if the differential CQI value indicates an abnormal condition.

According to the invention, the method comprises determining the predicted CQI value by performing a machine learning algorithm.

According to the invention, the method comprises sending to the terminal device one or more prediction coefficients obtained when performing the machine learning algorithm, particularly when the terminal device enters a determined area associated with the network node.

The method of the fourth aspect and its implementation forms achieve the same advantages and effects as described above for the network node of the second aspect and its respective implementation forms.

A fifth aspect provides computer program product storing program code for performing the method according to the third and fourth aspect and their implementations, when the computer program is run by a processor.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the present invention will be explained in the following description of specific embodiments in relation to the enclosed drawings, in which
- FIG. 1: shows a terminal device according to an embodiment.
- FIG. 2: shows a network node, such as a base station device, according to an embodiment.
- FIG. 3: shows a reporting procedure performed by a terminal device according to an embodiment and a network node, such as a base station device according to an embodiment. The terminal device and the network node form a system for carrying out a differential CQI value reporting procedure.
- FIG. 4: shows a method according to an embodiment for a terminal device.
- FIG. 5: shows a method according to an embodiment for a network node, such as a base station device.
- FIG. 6: shows a terminal device according to an embodiment moving in a determined area associated with a network node, such as a base station device according to an embodiment.
- FIG. 7: shows an example of an outcome of the proposed differential CQI value reporting procedure.
- FIG. 8: shows a cumulative distribution function (CDF) of CQI value prediction error probability for three neural network configurations.

### DETAILED DESCRIPTION OF EMBODIMENTS

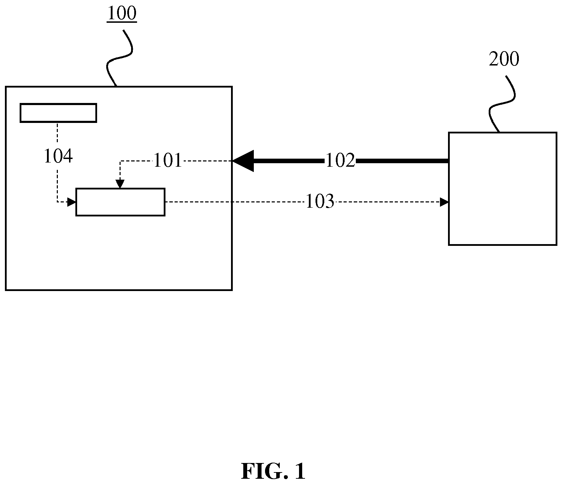

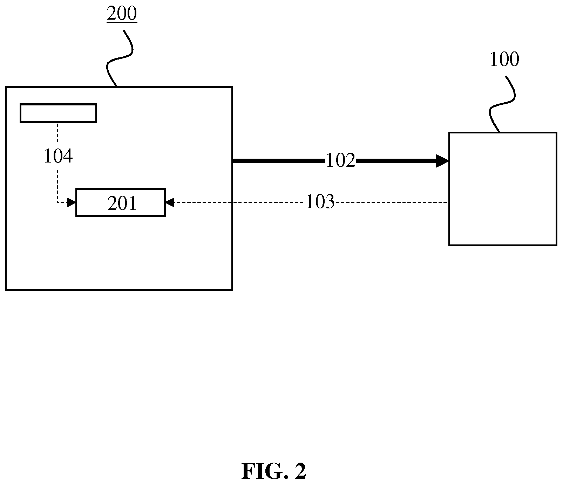

FIG. 1 shows a terminal device 100 according to an embodiment. The terminal device 100 is specifically configured to carry out a differential CQI value reporting procedure as proposed in this document. The terminal device 100 may be an UE, e.g. in an LTE network. The terminal device 100 may be associated to a network node, such as a base station device 200 (see also FIG. 2), e.g. to an eNB in an LTE network. The terminal device 100 may receive data from the base station device 200 via a DL channel 102 and may send data to the base station device 200 via an Uplink (UL) channel (not shown). In the following the description of the embodiments will refer to a base station device for simplicity.

The terminal device 100 is especially configured to obtain, in a current time interval, a CQI value 101 related to the DL channel 102 between the base station device 200 and the terminal device 100. For instance, the terminal device 100 may to this end estimate the DL channel 102, and may compute said CQI value 101 from the Signal-to-Noise Ratio (SNR). The terminal device 100 may store the obtained CQI value 101 as CQI value of the current time interval under normal conditions. In case of abnormal condition (described later) the terminal device 100 may disregard the obtained CQI value 101, may predict a CQI value, and may store this predicted CQI value as the CQI value of the current time interval.

Further, the terminal device 100 is configured to calculate a differential CQI value 103 based on the obtained CQI value 101 and a CQI value 104 of a previous time interval. To this end, the terminal device 100 may retrieve the CQI value 104 of the previous time interval from a memory or the like. The terminal device 100 may thus be configured to store one or more CQI values 104 of one or more previous time intervals, and may store the CQI value of the current time interval as soon as it is set (i.e. the final decision on the CQI value of the current time interval is taken). Notably, the terminal device 100 uses the obtained CQI value 101 for generating the differential CQI value 103 regardless of whether the obtained CQI value 101 is set as CQI value of the current time interval or not.

Further, the terminal device 100 is configured to send the differential CQI value 103 to the base station device 200. The terminal device 100 can particularly report the differential CQI value 103 by the same mechanism a conventional terminal device, e.g. UE, reports the conventional full CQI value.

FIG. 2 shows a base station device 200 according to an embodiment of the invention. The base station device 200 is configured to carry out the differential CQI value reporting procedure proposed in this document. The base station device 200 may be an eNB, e.g. in an LTE network. The base station device 200 may be associated to at least one terminal device 100 (see also FIG. 1), e.g. a UE in an LTE network. The base station device 200 may receive data from the terminal device 100 via an UL channel (not shown) and may send data to the terminal device 100 via the DL channel 102.

The base station device 200 is especially configured to receive the differential CQI value 103 from the terminal device 100, wherein the differential CQI value 103 relates to the DL channel 102 between the base station device 200 and the terminal device 100. The base station device 200 may particularly receive the differential CQI value 103 by the same mechanism a conventional base station device, e.g. eNB, receives the conventional full CQI value from a conventional terminal device.

Further, the base station device 200 is configured to obtain a CQI value 201 of a current time interval based on the differential CQI value 103 and a CQI value 104 of a previous time interval. In particular, the base station device 200 may calculate the CQI value 201 of the current time slot directly from the CQI value 104 of the previous time interval by using the differential CQI value 103. This is particularly the case under normal conditions. The base station device 200 may also decide based on the differential CQI value 103 to rather predict a CQI value and set the predicted CQI value as the CQI value of the current time interval.

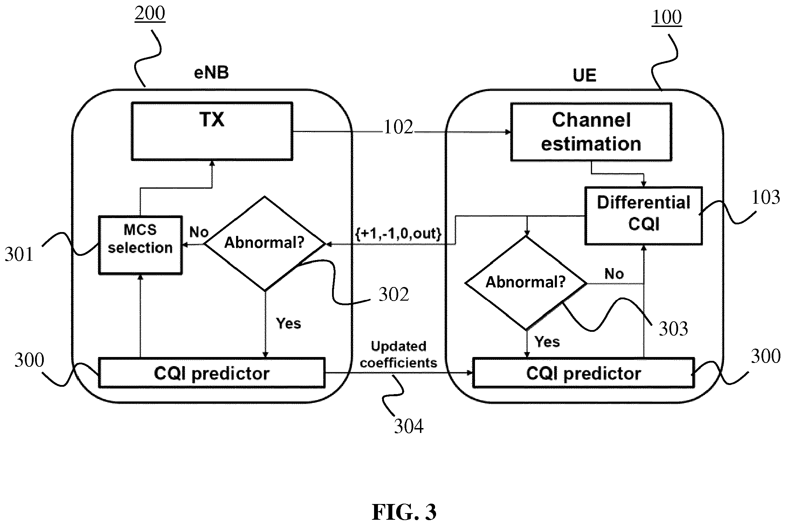

FIG. 3 shows the proposed differential CQI value reporting procedure performed by a terminal device 100 according to an embodiment of the invention, which builds on the terminal device 100 of FIG. 1, and a base station device 200 according to an embodiment of the invention, which builds on the base station device 200 of FIG. 2. Same elements in FIG. 1, FIG. 2 and FIG. 3 are labelled with same reference signs and function likewise.

For the differential CQI value reporting procedure, it is assumed that a full CQI value has four bits, i.e. at a time interval n, CQI[n] ∈ {0,1,...,15} is assumed to be the value of a 4-bit quantized CQI computed by the terminal device 100 and may take 16 different values (or units). It is proposed that the differential CQI value 103 has only two bits, i.e. half the bits of the full CQI value. At time interval n, the terminal device 100 reports back to the base station device 200 two bits, wherein the two bits describe the difference between the CQI value 101, which is obtained by the terminal device 100 for the current interval, and the CQI value 104, which was valid for the previous time interval n-1. Four cases may be indicated with such a differential CQI value 103 of two bits:
- CQI[n] = CQI[n-1] + x (e.g. x = 1), i.e., the obtained CQI value 101 is increased by a first predefined amount, which is a small amount x compared the previous CQI value 104. For instance, by one unit of the 16 possible units described above (this event may be associated to the pair of bits '10' of the differential CQI value 103).
- CQI[n] = CQI[n-1] - x (e.g. x = 1), i.e., the obtained CQI value 101 is decreased by a second predefined amount, which is a small amount x compared to the previous CQI value 104. For instance, by one unit (this event may be associated to the pair of bits '01'|).
- CQI[n] = CQI[n-1], i.e., the obtained CQI value 101 remains the same as the previous CQI value 104 (this event may be associated to the pair of bits '00').
- |CQI[n] - CQI[n-1]| > x (e.g. x = 1), i.e., the obtained CQI value 101 changes by a larger amount than x compared to the previous CQI value 104. The larger amount is larger than the first and/or second predefined amount as defined above. For instance, by more than one unit (this abnormal event may be associated to the pair of bits '11').

Notably, an initialization phase is preferably applied to start the proposed reporting procedure of the invention. Both the base station device 200 and the terminal device 100 may start from a standardized CQI value, and may then use the differential approach until it reaches the correct value.

A limited variability of the CQI value in the short term has been proven in literature, and is also mandated by 3GPP, in order to maximize the continuity of the MCS. This means that in the above-described exemplary procedure, the most differential CQI values 103 will indicate one of the first three states (i.e. -1, 0, or +1) of the obtained CQI value 101 compared to the previous CQI value 104. However, the attenuation seen by the terminal device 100 may change according to its position in a determined area associated to the base station device 200, which is also referred to as region of interest (ROI). For instance, the distance between the terminal device 100 and the base station device 200 may change and/or propagation conditions may change. Specifically, an abnormal event ('11' in the above exemplary example of the differential CQI value 103) may occur, for example, at a street corner or on a transition between line-of-sight (LOS) propagation conditions and non-LOS (NLOS) propagation conditions (or vice versa).

In case of the occurrence of an abnormal event indicated by the differential CQI value 103, it is proposed that the base station device 200 does not directly calculate the CQI value 201 of the current time interval from the previous CQI value 104 and the differential CQI value 103. Instead, it is proposed that the base station device 200 predicts the CQI value 201 of the current time interval from one or more CQI values 104 of past time intervals. In particular, a machine learning approach may be used for this prediction as follows.

During a training phase, a machine learning algorithm (or the entity carrying out the machine learning algorithm) may learn the correspondence between CQI values preceding an abnormal event and the value of the missing CQI, particularly by using the conventional 4-bit CQI feedback of LTE. During an exploitation phase, upon receiving the indication of an abnormal event from the terminal device 100, the machine learning algorithm may supply to the base station device 200 the predicted CQI value 300 based on the observation of past CQI values (see the "CQI predictor" in FIG. 3).

If the prediction made by the machine learning algorithm is wrong, the proposed protocol may cause a system performance degradation. In this case, the base station device 200 would be misaligned with the terminal device 100 when the differential procedure restarts after the abnormal event. In order to prevent this, the base station device 200 may transmit prediction coefficients of the machine learning algorithm to the terminal device 100, particularly when it enters a ROI. The terminal device 100 may use the same machine learning algorithm as the base station device 200 to predict the CQI value 201 of the current time interval from a CQI value 104 of one or more previous time intervals, and due to the prediction coefficients 304 the two devices 100 and 200 can remain perfectly synchronized.

Therefore, upon an abnormal event, both the base station device 200 and the terminal device 100 may exploit, for instance, a neural network to obtain the predicted CQI value 300 (denoted by CQIpred[n]). Thus, in the next time interval n+1, the differential CQI value 103 for reporting is CQI[n+1] - CQIpred[n], and the differential scheme may be applied as described above.

The operation flow of FIG. 1 may be summarized as follows. At the side of the terminal device 100, the terminal device 100 obtains a CQI value 101 for a current time interval, e.g. by measuring or estimating the DL channel 102, and e.g. by computing the CQI value 101 from the Signal-to-Noise Ratio (SNR). The terminal device 100 then feeds back to the base station device 200 the difference between the obtained CQI value 101 and the previous CQI value 104, which is e.g. stored in the local memory.

For the differential CQI value 103 2 bits are used. If the differential CQI value 103 is e.g. '11' (indication of an abnormal event), as determined at block 303, the terminal device 100 determines a predicted CQI value 300 from a CQI value 104 of one or more previous time intervals, and updates the memory with the predicted CQI value 300. Otherwise, the CQI value 104 of the previous time interval in the memory is updated to the CQI value 201 of the current time interval considering the differential CQI value 103. Alternatively, the obtained CQI value 101 is simply stored as CQI value 201 of the current time interval.

At the side of the base station device 200, the base station device receives the feedback message containing the CQI correction, i.e. the differential CQI value 103, from the terminal device 100. If the differential CQI value 103 is '11' (indication of an abnormal event), as determined at block 302, the base station device 200 activates the machine learning entity ("CQI predictor") to predict the CQI value 300 and e.g. provides it to the MCS selection block 301. That is, the base station device 200 obtains the CQI value 201 of the current time interval by determining a predicted CQI value 300 from a CQI value 104 of one or more previous time intervals. If the differential CQI value 103 is not e.g. '11', the base station device 200 provides the updated CQI value 201 to the MCS selection block 301. That is, the base station device 200 obtains the CQI value 201 of the current time interval by updating the CQI value 104 of the previous time interval based on the variation associated with the state indicated by the differential CQI value 103.

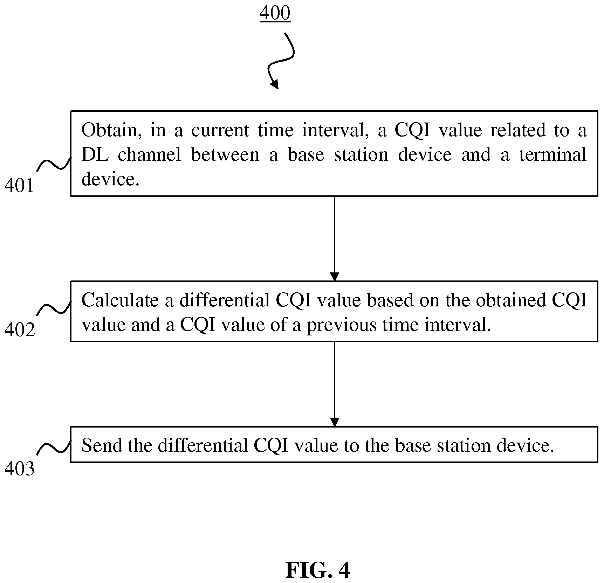

FIG. 4 shows, according to the above, a general method 400 for a terminal device 100 according to an embodiment of the invention. The method 400 comprises a step 401 of obtaining, in a current time interval, a CQI value 101 related to a DL channel 102 between a base station device 200 and the terminal device 100. Further, the method 400 includes a step 402 of calculating a differential CQI value 103 based on the obtained CQI value 101 and a CQI value 104 of a previous time interval, and a step 403 of sending the differential CQI value 103 to the base station device 200.

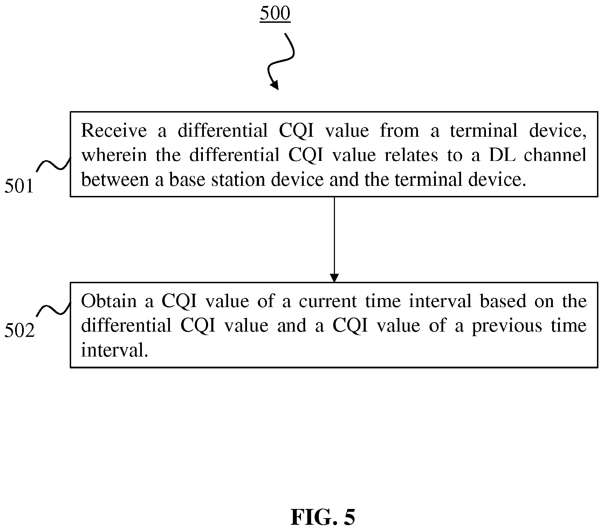

FIG. 5 shows, according to the above, a general method 500 for a base station device 200 according to an embodiment of the invention. The method 500 comprises a step 501 of receiving 501 a differential CQI value 103 from a terminal device 100, wherein the differential CQI value 103 relates to a DL channel 102 between the base station device 200 and the terminal device 100. Further, the method 500 comprises a step 502 of obtaining a CQI value 201 of a current time interval based on the differential CQI value 103 and a CQI value 104 of a previous time interval.

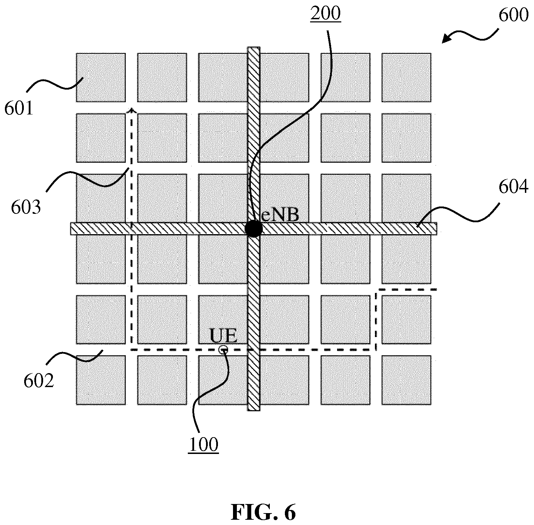

In the following, an exemplary embodiment is proposed. In this embodiment, with reference to FIG. 6, a determined area 600 is considered as ROI, particularly a square area of side S with a Manhattan topology featuring roads 602 and blocks 601 of buildings. The base station device 200 is placed at the center of the area 600, e.g. on top of a mast placed at the center of a roundabout of radius 5m. The terminal device 100 is assumed to travel a randomly generated path 603 along the streets 602 in the area 600 multiple times, changing every time the selected street lane as well as the speed. To sample such mobility pattern, the time axis is divided into intervals of length *τ* that may be equal to the CQI report period, i.e., *τ* = *N_{pd}T_{TTI},* where *T_{TTI}* is the duration of a transmission time interval.

In summary, the embodiment based on the determined area 600 exemplarily assumes:
- Manhattan topology
- A side length of 525 m
- A road width of 15 m
- A block size of 75 m
- The base station device 200 is placed in the center of the area 600
- The terminal device 100 repeats the same path many times, changing street lane and speed
- *N_{pd}* = 160
- Striped areas 604 are in LOS, the others are in NLOS conditions.

The wireless channel model is assumed as follows. As done in most of literature, a DL wireless channel model is considered that features a global gain caused by:
- "Propagation loss": distinguishing between LOS and NLOS propagation
- "Correlated shadowing": a log-normally distributed random variable due to the presence of buildings
- The "fast-fading" component, which is due to multi-path propagation and follows a Rayleigh distribution, can be neglected, because it is averaged out at the time scale under consideration (*N_{pd}* = 160)

The wireless channel parameters are summarized in the table below:

| **Parameter** | **Value** |
|---|---|
| DL carrier frequency | 2,120 MHz (LTE FDD band 1) |
| Shadowing variance | 8 dB |
| Decorrelation distance | 75 m |
| Base station device antenna height | 15 m |
| Terminal device antenna height | 1.5 m |
| Minimum coupling loss (MCL) | 66.58 dB |

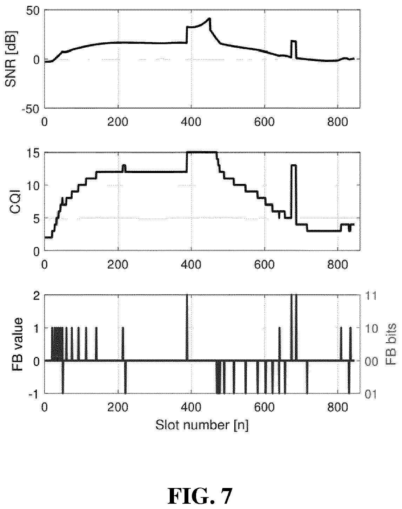

FIG. 7 depicts an example outcome of the above-proposed reporting scheme. In particular:
- The top figure shows the SNR time series
- The middle figure shows the CQI time series
- The bottom figure shows the proposed differential CQI feedback, wherein a feedback value "2" simply means an abnormal condition in general.

It can be seen that most of the trace can be effectively described by the envisioned differential CQI value reporting scheme, except for a few samples which are in abnormal condition due to LOS-NLOS (or vice versa) transitions. In such cases, the proposed machine learning approach provides the missing CQI value. It is observed that, even if the prediction made by the machine learning entity is not optimal, the base station device 200 and the terminal device 100 remain synchronized, since the base station device 200 transmits the prediction coefficients of the machine learning algorithm to the terminal device 100, particularly when the terminal device 100 enters the area 600, and possibly periodically updates these prediction coefficients.

Performance of the differential feedback procedure was evaluated. In particular, in order to obtain statistics of the performance of the procedure, the operation of the procedure was simulated on *Q* = 50 randomly generated paths, each with *q* = 250 replicas with different traveling speed in the range [2.5, ..., 20] m/s. It is noted that only paths without loops are considered.

The machine learning algorithm is implemented by a neural network with 1 hidden layer of size *γ*. In order to implement the neural network, a pattern recognition network is employed, which is trained to classify inputs according to target classes. In the present case, the inputs of the neural network are CQI values of P non-consecutive samples preceding an abnormal event. The reason for taking CQI values which are spaced apart of *µ* intervals is two-fold: on the one hand, the complexity of the neural network is reduced; on the other hand, the neural network is more robust to speed changes across different realizations. The targets of the neural network are the CQI values in correspondence of the abnormal event. During the exploitation phase, CQI traces are supplied, which are different from those provided for the training phase. Pₑᵣᵣ is defined as the probability of a wrong CQI value prediction given that an abnormal event is observed.

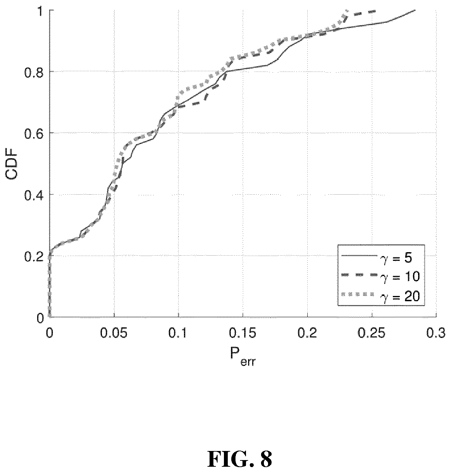

FIG. 8 shows the cumulative distribution function (CDF) of Pₑᵣᵣ for various neural network configurations. For the training phase and the exploitation phase, CQI sequences down-sampled by a factor *µ* = 2 are used. It can be seen that the neural network is always correct in approximately 20% of the randomly generated paths, thus the proposed differential approach is error-free and effectively reduces the feedback by a factor 2. On the other hand, considering all simulated paths, in the worst case at most approximately the 25% of the neural network predictions were wrong. Moreover, it can be seen that in the 50% (85%) of these paths the error rate is below 5% (15%). It is also noted that the performance gap among neural networks with different configurations is negligible. From simulations, it can also be observed that the neural network mistakes are usually due to similar CQI sequences preceding distinct abnormal events, that is, having different CQI targets. In these cases, the neural network is likely to mistake one event for the other, making a wrong CQI value prediction.

The present disclosure has been described in conjunction with various embodiments as examples as well as implementations. However, other variations can be understood and effected by those persons skilled in the art and practicing the claimed subject matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A terminal device (100), configured to
obtain, in a current time interval, a Channel Quality Indicator, CQI, value (101) related to a Downlink, DL, channel (102) between a network node (200) and the terminal device (100),
calculate a differential CQI value (103) based on the obtained CQI value (101) and a CQI value (104) of a previous time interval, and
send the differential CQI value (103) to the network node (200),
wherein the differential CQI value (103) is designed to indicate:
- a state associated with a predefined variation of the obtained CQI value (101) over the CQI value (104) of the previous time interval, and
- a state indicating an abnormal condition associated with an undefined variation of the obtained CQI value (101) over the CQI value (104) of the previous time interval,
wherein the terminal device (100) is further configured to: if the differential CQI value (103) indicates an abnormal value:
receive one or more prediction coefficients from the network node (200),
determine a predicted CQI value (300) from a CQI value (104) of one or more previous time intervals by performing a machine learning algorithm based on the received prediction coefficients, and
store the predicted CQI value (300) as CQI value (201) of the current time interval.

2. The terminal device (100) according to claim 1, configured to
obtain the CQI value (101) and calculate the differential CQI value (103) within a determined subband.

3. The terminal device (100) according to claim 1 or 2, wherein
each CQI value (101, 104) consists of four bits, and
the differential CQI value (103) consists of two bits.

4. The terminal device (100) according to any of the preceding claims, wherein the differential CQI value (103) is designed to indicate an increase or decrease of the obtained CQI value compared to the CQI value of the previous time interval larger than a predefined increase or decrease, said state indicating the abnormal condition.

5. The terminal device (100) according to any of the preceding claims, wherein
the differential CQI value (103) is designed to indicate the following states:
- a predefined increase of the obtained CQI value (101) compared to the CQI value (104) of the previous time interval,
- a predefined decrease of the obtained CQI value (101) compared to the CQI value (104) of the previous time interval,
- no change of the obtained CQI value (101) compared to the CQI value (104) of the previous time interval,
- an increase or decrease of the obtained CQI value (101) compared to the CQI value (104) of the previous time interval larger than the predefined increase or decrease indicating an abnormal condition.

6. The terminal device (100) according to any of the preceding claims, configured to
store the obtained CQI value (101) as CQI value (201) of the current time interval, if the differential CQI value (103) does not indicate an abnormal condition.

7. A network node (200), configured to
receive a differential Channel Quality Indicator, CQI value (103) from a terminal device (100), wherein the differential CQI value (103) relates to a downlink, DL, channel (102) between the network node (200) and the terminal device (100), and
obtain a CQI value (201) of a current time interval based on the differential CQI value (103) and a CQI value (104) of a previous time interval,
wherein the differential CQI value (103) is designed to indicate:
- a state associated with a predefined variation of a CQI value (101) obtained by the terminal device (100) over the CQI value (104) of the previous time interval, and
- a state indicating an abnormal condition associated with an undefined variation of the CQI value (101) obtained by the terminal device (100) over the CQI value (104) of the previous time interval,
wherein the network node (200) is further configured to: if the differential CQI value (103) indicates an abnormal condition:
obtain the CQI value (201) of the current time interval by determining a predicted CQI value (300) from a CQI value (104) of one or more previous time intervals by performing a machine learning algorithm, and
send to the terminal device (100) one or more prediction coefficients obtained when performing the machine learning algorithm, particularly when the terminal device (100) enters a determined area (600) associated with the network node (200).

8. The network node (200) according to claim 7, configured to
obtain the CQI value (201) of the current time interval by updating the CQI value (104) of the previous time interval based on the variation associated with the state indicated by the differential CQI value (103), if the differential CQI value (103) does not indicate an abnormal condition.

9. A method (400) for a terminal device (100), the method (400) comprising
obtaining (401), in a current time interval, a Channel Quality Indicator, CQI, value (101) related to a Downlink, DL, channel (102) between a network node (200) and the terminal device (100),
calculating (402) a differential CQI value (103) based on the obtained CQI value (101) and a CQI value (104) of a previous time interval, and
sending (403) the differential CQI value (103) to the network node (200),
wherein the differential CQI value (103) is designed to indicate:
- a state associated with a predefined variation of the obtained CQI value (101) over the CQI value (104) of the previous time interval, and
- a state indicating an abnormal condition associated with an undefined variation of the obtained CQI value (101) over the CQI value (104) of the previous time interval,
wherein if the differential CQI value (103) indicates an abnormal condition, the method further comprises receiving one or more prediction coefficients from the network node (200),
determining a predicted CQI value (300) from a CQI value (104) of one or more previous time intervals by performing a machine learning algorithm based on the received prediction coefficients, and
storing the predicted CQI value (300) as CQI value (201) of the current time interval.

10. A method (500) for a network node (200), the method (500) comprising
receiving (501) a differential Channel Quality Indicator, CQI value (103) from a terminal device (100), wherein the differential CQI value (103) relates to a downlink, DL, channel (102) between the network node (200) and the terminal device (100), and
obtaining (502) a CQI value (201) of a current time interval based on the differential CQI value (103) and a CQI value (104) of a previous time interval,
wherein the differential CQI value (103) is designed to indicate:
- a state associated with a predefined variation of a CQI value (101) obtained by the terminal device (100) over the CQI value (104) of the previous time interval, and
- a state indicating an abnormal condition associated with an undefined variation of the CQI value (101) obtained by the terminal device (100) over the CQI value (104) of the previous time interval,
wherein if the differential CQI value (103) indicates an abnormal condition, the method further comprises
obtaining the CQI value (201) of the current time interval by determining a predicted CQI value (300) from a CQI value (104) of one or more previous time intervals by performing a machine learning algorithm, and
sending to the terminal device (100) one or more prediction coefficients obtained when performing the machine learning algorithm, particularly when the terminal device (100) enters a determined area (600) associated with the network node (200).

11. A computer program product storing program code which, when the program is run by a processor, causes the processor to perform the method according to claim 9 or 10.

## Patentansprüche

1. Endgerätevorrichtung (100), die zu Folgendem ausgelegt ist Erhalten eines Kanalqualitätsanzeige(CQI)-Wertes (101), der einen Downlink(DL)-Kanal (102) zwischen einem Netzwerkknoten (200) und der Endgerätevorrichtung (100) betrifft, in einem aktuellen Zeitintervall,
Berechnen eines differenziellen CQI-Wertes (103) auf Basis des erhaltenen CQI-Wertes (101) und eines CQI-Wertes (104) eines vorherigen Zeitintervalls und
Senden des differenziellen CQI-Wertes (103) an den Netzwerkknoten (200),
wobei der differenzielle CQI-Wert (103) Folgendes anzeigen soll:
- einen Status, der mit einer vordefinierten Abweichung des erhaltenen CQI-Wertes (101) vom CQI-Wert (104) des vorherigen Zeitintervalls verknüpft ist, und
- einen Status, der einen unnormalen Zustand anzeigt, der mit einer nicht definierten Abweichung des erhaltenen CQI-Wertes (101) vom CQI-Wert (104) des vorherigen Zeitintervalls verknüpft ist,
wobei die Endgerätevorrichtung (100) ferner zu Folgendem ausgelegt ist:
wenn der differenzielle CQI-Wert (103) einen unnormalen Wert anzeigt:
Empfangen von einem oder mehreren Vorhersagekoeffizienten vom Netzwerkknoten (200),
Bestimmen eines vorhergesagten CQI-Wertes (300) anhand eines CQI-Wertes (104) aus einem oder mehreren vorherigen Zeitintervallen durch Durchführen eines Maschinenlernalgorithmus auf Basis der empfangenen Vorhersagekoeffizienten und
Speichern des vorhergesagten CQI-Wertes (300) als CQI-Wert (201) des aktuellen Zeitintervalls.

2. Endgerätevorrichtung (100) nach Anspruch 1, die zu Folgendem ausgelegt ist
Erhalten des CQI-Wertes (101) und Berechnen des differenziellen CQI-Wertes (103) in einem bestimmten Unterband.

3. Endgerätevorrichtung (100) nach Anspruch 1 oder 2, wobei jeder CQI-Wert (101, 104) aus vier Bits besteht und
der differenzielle CQI-Wert (103) aus zwei Bits besteht.

4. Endgerätevorrichtung (100) nach einem der vorhergehenden Ansprüche, wobei der differenzielle CQI-Wert (103) eine Erhöhung oder Verringerung des erhaltenen CQI-Wertes gegenüber dem CQI-Wert des vorherigen Zeitintervalls anzeigen soll, die größer ist als eine vordefinierte Erhöhung oder Verringerung, wobei der Status den unnormalen Zustand anzeigt.

5. Endgerätevorrichtung (100) nach einem der vorhergehenden Ansprüche, wobei
der differenzielle CQI-Wert (103) die folgenden Status anzeigen soll:
- eine vordefinierte Erhöhung des erhaltenen CQI-Wertes (101) gegenüber dem CQI-Wert (104) des vorherigen Zeitintervalls,
- eine vordefinierte Verringerung des erhaltenen CQI-Wertes (101) gegenüber dem CQI-Wert (104) des vorherigen Zeitintervalls,
- keine Änderung des erhaltenen CQI-Wertes (101) gegenüber dem CQI-Wert (104) des vorherigen Zeitintervalls,
- eine Erhöhung oder Verringerung des erhaltenen CQI-Wertes (101) gegenüber dem CQI-Wert (104) des vorherigen Zeitintervalls, die größer ist als die vordefinierte Erhöhung oder Verringerung, die einen unnormalen Zustand anzeigt.

6. Endgerätevorrichtung (100) nach einem der vorhergehenden Ansprüche, die zu Folgendem ausgelegt ist
Speichern des erhaltenen CQI-Wertes (101) als CQI-Wert (201) des aktuellen Zeitintervalls, wenn der differenzielle CQI-Wert (103) keinen unnormalen Zustand anzeigt.

7. Netzwerkknoten (200), der zu Folgendem ausgelegt ist Empfangen eines differenziellen Kanalqualitätsanzeige(CQI)-Wertes (103) von einer Endgerätevorrichtung (100), wobei der differenzielle CQI-Wert (103) einen Downlink(DL)-Kanal (102) zwischen dem Netzwerkknoten (200) und der Endgerätevorrichtung (100) anzeigt, und
Erhalten eines CQI-Wertes (201) eines aktuellen Zeitintervalls auf Basis des differenziellen CQI-Wertes (103) und eines CQI-Wertes (104) eines vorherigen Zeitintervalls,
wobei der differenzielle CQI-Wert (103) Folgendes anzeigen soll:
- einen Status, der mit einer vordefinierten Abweichung eines durch die Endgerätevorrichtung (100) erhaltenen CQI-Wertes (101) vom CQI-Wert (104) des vorherigen Zeitintervalls verknüpft ist, und
- einen Status, der einen unnormalen Zustand anzeigt, der mit einer nicht definierten Abweichung des durch die Endgerätevorrichtung (100) erhaltenen CQI-Wertes (101) vom CQI-Wert (104) des vorherigen Zeitintervalls verknüpft ist,
wobei der Netzwerkknoten (200) ferner zu Folgendem ausgelegt ist: wenn der differenzielle CQI-Wert (103) einen unnormalen Zustand anzeigt:
Erhalten des CQI-Wertes (201) des aktuellen Zeitintervalls durch Bestimmen eines vorhergesagten CQI-Wertes (300) anhand eines CQI-Wertes (104) aus einem oder mehreren vorherigen Zeitintervallen durch Durchführen eines Maschinenlernalgorithmus und
Senden von einem oder mehreren Vorhersagekoeffizienten, die erhalten werden, wenn der Maschinenlernalgorithmus durchgeführt wird, an die Endgerätevorrichtung (100), insbesondere wenn die Endgerätevorrichtung (100) in ein bestimmtes Gebiet (600) eintritt, das mit dem Netzwerkknoten (200) verknüpft ist.

8. Netzwerkknoten (200) nach Anspruch 7, der zu Folgendem ausgelegt ist
Erhalten des CQI-Wertes (201) des aktuellen Zeitintervalls durch Aktualisieren des CQI-Wertes (104) des vorherigen Zeitintervalls auf Basis der Abweichung, die mit dem vom differenziellen CQI-Wert (103) angezeigten Status verknüpft ist, wenn der differenzielle CQI-Wert (103) keinen unnormalen Zustand anzeigt.

9. Verfahren (400) für eine Endgerätevorrichtung (100), wobei das Verfahren (400) Folgendes umfasst
Erhalten (401) eines Kanalqualitätsanzeige(CQI)-Wertes (101), der einen Downlink(DL)-Kanal (102) zwischen einem Netzwerkknoten (200) und der Endgerätevorrichtung (100) betrifft, in einem aktuellen Zeitintervall,
Berechnen (402) eines differenziellen CQI-Wertes (103) auf Basis des erhaltenen CQI-Wertes (101) und eines CQI-Wertes (104) eines vorherigen Zeitintervalls und
Senden (403) des differenziellen CQI-Wertes (103) an den Netzwerkknoten (200),
wobei der differenzielle CQI-Wert (103) Folgendes anzeigen soll:
- einen Status, der mit einer vordefinierten Abweichung des erhaltenen CQI-Wertes (101) vom CQI-Wert (104) des vorherigen Zeitintervalls verknüpft ist, und
- einen Status, der einen unnormalen Zustand anzeigt, der mit einer nicht definierten Abweichung des erhaltenen CQI-Wertes (101) vom CQI-Wert (104) des vorherigen Zeitintervalls verknüpft ist,
wobei das Verfahren, wenn der differenzielle CQI-Wert (103) einen unnormalen Zustand anzeigt, ferner Folgendes umfasst Empfangen von einem oder mehreren Vorhersagekoeffizienten vom Netzwerkknoten (200),
Bestimmen eines vorhergesagten CQI-Wertes (300) anhand eines CQI-Wertes (104) aus einem oder mehreren vorherigen Zeitintervallen durch Durchführen eines Maschinenlernalgorithmus auf Basis der empfangenen Vorhersagekoeffizienten und
Speichern des vorhergesagten CQI-Wertes (300) als CQI-Wert (201) des aktuellen Zeitintervalls.

10. Verfahren (500) für einen Netzwerkknoten (200), wobei das Verfahren (500) Folgendes umfasst
Empfangen (501) eines differenziellen Kanalqualitätsanzeige(CQI)-Wertes (103) von einer Endgerätevorrichtung (100), wobei der differenzielle CQI-Wert (103) einen Downlink(DL)-Kanal (102) zwischen dem Netzwerkknoten (200) und der Endgerätevorrichtung (100) anzeigt, und
Erhalten (502) eines CQI-Wertes (201) eines aktuellen Zeitintervalls auf Basis des differenziellen CQI-Wertes (103) und eines CQI-Wertes (104) eines vorherigen Zeitintervalls,
wobei der differenzielle CQI-Wert (103) Folgendes anzeigen soll:
- einen Status, der mit einer vordefinierten Abweichung eines durch die Endgerätevorrichtung (100) erhaltenen CQI-Wertes (101) vom CQI-Wert (104) des vorherigen Zeitintervalls verknüpft ist, und
- einen Status, der einen unnormalen Zustand anzeigt, der mit einer nicht definierten Abweichung des durch die Endgerätevorrichtung (100) erhaltenen CQI-Wertes (101) vom CQI-Wert (104) des vorherigen Zeitintervalls verknüpft ist,
wobei das Verfahren, wenn der differenzielle CQI-Wert (103) einen unnormalen Zustand anzeigt, ferner Folgendes umfasst Erhalten des CQI-Wertes (201) des aktuellen Zeitintervalls durch Bestimmen eines vorhergesagten CQI-Wertes (300) anhand eines CQI-Wertes (104) aus einem oder mehreren vorherigen Zeitintervallen durch Durchführen eines Maschinenlernalgorithmus und
Senden von einem oder mehreren Vorhersagekoeffizienten, die erhalten werden, wenn der Maschinenlernalgorithmus durchgeführt wird, an die Endgerätevorrichtung (100), insbesondere wenn die Endgerätevorrichtung (100) in ein bestimmtes Gebiet (600) eintritt, das mit dem Netzwerkknoten (200) verknüpft ist.

11. Computerprogrammprodukt, in dem ein Programmcode gespeichert ist, der, wenn das Programm durch einen Prozessor ausgeführt wird, den Prozessor veranlasst, das Verfahren nach einem der Ansprüche 9 oder 10 durchzuführen.

## Revendications

1. Dispositif terminal (100), configuré pour
obtenir, dans un intervalle de temps actuel, une valeur (101) d'Indicateur de Qualité de Canal, CQI, liée à un canal (102) de Liaison Descendante, DL, entre un nœud de réseau (200) et le dispositif terminal (100),
calculer une valeur CQI différentielle (103) sur la base de la valeur CQI obtenue (101) et d'une valeur CQI (104) d'un intervalle de temps précédent, et
envoyer la valeur CQI différentielle (103) au nœud de réseau (200),
dans lequel la valeur CQI différentielle (103) est conçue pour indiquer :
- un état associé à une variation prédéfinie de la valeur CQI obtenue (101) par rapport à la valeur CQI (104) de l'intervalle de temps précédent, et
- un état indiquant une condition anormale associée à une variation indéfinie de la valeur CQI obtenue (101) par rapport à la valeur CQI (104) de l'intervalle de temps précédent,
dans lequel le dispositif terminal (100) est en outre configuré pour : si la valeur CQI différentielle (103) indique une valeur anormale :
recevoir un ou plusieurs coefficients de prédiction du nœud de réseau (200),
déterminer une valeur CQI prédite (300) à partir d'une valeur CQI (104) d'un ou de plusieurs intervalles de temps précédents en exécutant un algorithme d'apprentissage automatique sur la base des coefficients de prédiction reçus, et
stocker la valeur CQI prédite (300) en tant que valeur CQI (201) de l'intervalle de temps actuel.

2. Dispositif terminal (100) selon la revendication 1, configuré pour obtenir la valeur CQI (101) et calculer la valeur CQI différentielle (103) dans une sous-bande déterminée.

3. Dispositif terminal (100) selon la revendication 1 ou 2, dans lequel
chaque valeur CQI (101, 104) est composée de quatre bits, et la valeur CQI différentielle (103) est composée de deux bits.

4. Dispositif terminal (100) selon une quelconque revendication précédente, dans lequel la valeur CQI différentielle (103) est conçue pour indiquer une augmentation ou une diminution de la valeur CQI obtenue par rapport à la valeur CQI de l'intervalle de temps précédent supérieure à une augmentation ou une diminution prédéfinie, ledit état indiquant la condition anormale.

5. Dispositif terminal (100) selon une quelconque revendication précédente, dans lequel
la valeur CQI différentielle (103) est conçue pour indiquer les états suivants :
- une augmentation prédéfinie de la valeur CQI obtenue (101) par rapport à la valeur CQI (104) de l'intervalle de temps précédent,
- une diminution prédéfinie de la valeur CQI obtenue (101) par rapport à la valeur CQI (104) de l'intervalle de temps précédent,
- aucun changement de la valeur CQI obtenue (101) par rapport à la valeur CQI (104) de l'intervalle de temps précédent,
- une augmentation ou une diminution de la valeur CQI obtenue (101) par rapport à la valeur CQI (104) de l'intervalle de temps précédent supérieure à l'augmentation ou à la diminution prédéfinie indiquant une condition anormale.

6. Dispositif terminal (100) selon une quelconque revendication précédente, configuré pour stocker la valeur CQI obtenue (101) en tant que valeur CQI (201) de l'intervalle de temps actuel, si la valeur CQI différentielle (103) n'indique pas une condition anormale.

7. Nœud de réseau (200), configuré pour
recevoir une valeur différentielle (103) d'Indicateur de Qualité de Canal, CQI d'un dispositif terminal (100), dans lequel la valeur CQI différentielle (103) est liée à un canal de Liaison Descendante, DL, (102) entre le nœud de réseau (200) et le dispositif terminal (100), et
obtenir une valeur CQI (201) d'un intervalle de temps actuel sur la base de la valeur CQI différentielle (103) et d'une valeur CQI (104) d'un intervalle de temps précédent,
dans lequel la valeur CQI différentielle (103) est conçue pour indiquer :
- un état associé à une variation prédéfinie d'une valeur CQI (101) obtenue par le dispositif terminal (100) par rapport à la valeur CQI (104) de l'intervalle de temps précédent, et
- un état indiquant une condition anormale associée à une variation indéfinie de la valeur CQI (101) obtenue par le dispositif terminal (100) par rapport à la valeur CQI (104) de l'intervalle de temps précédent,
dans lequel le nœud de réseau (200) est en outre configuré pour : si la valeur CQI différentielle (103) indique une condition anormale :
obtenir la valeur CQI (201) de l'intervalle de temps actuel en déterminant une valeur CQI prédite (300) à partir d'une valeur CQI (104) d'un ou de plusieurs intervalles de temps précédents en exécutant un algorithme d'apprentissage automatique, et
envoyer au dispositif terminal (100) un ou plusieurs coefficients de prédiction obtenus lors de l'exécution de l'algorithme d'apprentissage automatique, en particulier lorsque le dispositif terminal (100) entre dans une zone déterminée (600) associée au nœud de réseau (200).

8. Nœud de réseau (200) selon la revendication 7, configuré pour
obtenir la valeur CQI (201) de l'intervalle de temps actuel en mettant à jour la valeur CQI (104) de l'intervalle de temps précédent sur la base de la variation associée à l'état indiqué par la valeur CQI différentielle (103), si la valeur CQI différentielle (103) n'indique pas une condition anormale.

9. Procédé (400) pour un dispositif terminal (100), le procédé (400) comprenant
l'obtention (401), dans un intervalle de temps actuel, d'une valeur (101) d'Indicateur de Qualité de Canal, CQI, liée à un canal de Liaison Descendante, DL, (102) entre un nœud de réseau (200) et le dispositif terminal (100),
le calcul (402) d'une valeur CQI différentielle (103) sur la base de la valeur CQI obtenue (101) et d'une valeur CQI (104) d'un intervalle de temps précédent, et
l'envoi (403) de la valeur CQI différentielle (103) au nœud de réseau (200),
dans lequel la valeur CQI différentielle (103) est conçue pour indiquer :
- un état associé à une variation prédéfinie de la valeur CQI obtenue (101) par rapport à la valeur CQI (104) de l'intervalle de temps précédent, et
- un état indiquant une condition anormale associée à une variation indéfinie de la valeur CQI obtenue (101) par rapport à la valeur CQI (104) de l'intervalle de temps précédent,
dans lequel si la valeur CQI différentielle (103) indique une condition anormale, le procédé comprend en outre la réception d'un ou de plusieurs coefficients de prédiction du nœud de réseau (200),
la détermination d'une valeur CQI prédite (300) à partir d'une valeur CQI (104) d'un ou de plusieurs intervalles de temps précédents en exécutant un algorithme d'apprentissage automatique sur la base des coefficients de prédiction reçus, et
le stockage de la valeur CQI prédite (300) en tant que valeur CQI (201) de l'intervalle de temps actuel.

10. Procédé (500) pour un nœud de réseau (200), le procédé (500) comprenant
la réception (501) d'une valeur (103) d'Indicateur de Qualité de Canal, CQI d'un dispositif terminal (100), dans lequel la valeur CQI différentielle (103) est liée à un canal de Liaison Descendante, DL, (102) entre le nœud de réseau (200) et le dispositif terminal (100), et
l'obtention (502) d'une valeur CQI (201) d'un intervalle de temps actuel sur la base de la valeur CQI différentielle (103) et d'une valeur CQI (104) d'un intervalle de temps précédent, dans lequel la valeur CQI différentielle (103) est conçue pour indiquer :
- un état associé à une variation prédéfinie d'une valeur CQI (101) obtenue par le dispositif terminal (100) par rapport à la valeur CQI (104) de l'intervalle de temps précédent, et
- un état indiquant une condition anormale associée à une variation indéfinie de la valeur CQI (101) obtenue par le dispositif terminal (100) par rapport à la valeur CQI (104) de l'intervalle de temps précédent,
dans lequel si la valeur CQI différentielle (103) indique une condition anormale, le procédé comprend en outre
l'obtention de la valeur CQI (201) de l'intervalle de temps actuel en déterminant une valeur CQI prédite (300) à partir d'une valeur CQI (104) d'un ou de plusieurs intervalles de temps précédents en exécutant un algorithme d'apprentissage automatique, et
l'envoi au dispositif terminal (100) d'un ou de plusieurs coefficients de prédiction obtenus lors de l'exécution de l'algorithme d'apprentissage automatique, en particulier lorsque le dispositif terminal (100) entre dans une zone déterminée (600) associée au nœud de réseau (200).

11. Produit de programme informatique stockant un code de programme qui, lorsque le programme est exécuté par un processeur, amène le processeur à mettre en œuvre le procédé selon la revendication 9 ou 10.
